# EUROPÄISCHE PATENTANMELDUNG

(11) **EP 1 077 439 A1**
(43) Veröffentlichungstag der Anmeldung: **21.02.2001**
(21) Anmeldenummer: 99115083.0
(22) Anmeldetag: 19.08.1999
(51) Int. Cl.: G09B 27/08

(54) **Der Globus steht Kopf**

(71) Anmelder: Frech, Reinhold, 81673 München (DE)
(72) Erfinder: Frech, Reinhold, 81673 München (DE)

(57) **Zusammenfassung**

Ein Erdglobus wird mit seiner Achse um 180 Grad gedreht, so dass in der Aufhängung der Nordpol unten ist und der Südpol oben.

Auf dem Sockel sind folgende Einzelaufschriften:
*"Ab 2000 steht die Welt auf dem Kopf"* oder
*"Mit Dir steht meine Welt Kopf"* oder
*"Du hast meine Welt auf den Kopf gestellt"* oder
*"Die totale Globalisierung"*

## Beschreibung

Bei der Idee handelt es sich um einen bereits bestehenden Gegenstand, der jedoch völlig umgestaltet wird.

**"Ein Globus steht Kopf"**
Analogaufschrift:
"***AB 2000 steht die Welt auf dem Kopf***"

Dabei wird ein Erdglobus in seiner Achse, d.h. in seiner Aufhängung um 180 Grad gedreht, sozusagen auf den Kopf gestellt, so dass der **Nordpol** am **unteren** Teil des Erdglobusses bzw. Aufhängung ist und der **Südpol** am **oberen** Teil der Aufhängung.
Die Buchstaben der geographischen Bezeichnungen werden entweder in der üblichen Schrift -Normalstand- oder ebenfalls um 180 Grad gedreht aufgedruckt.

Auf dem Sockel aus Holz, Metall oder Kunststoff steht die Aufschrift:
***"Ab 2000 steht die Welt auf dem Kopf***" oder
***"Mit Dir steht meine Welt Kopf***" oder
***"Du hast meine Welt auf den Kopf gestellt"*** oder
***"Die totale Globalisierung"*** oder
***"Im Universum gibt es kein oben und unten"*** oder
***"Es ist immer Ansichtssache, wer weiß eigentlich, dass sie richtig hing?"***

Die maßgebende zu patentierende Idee / Erfindung ist das "Kopfstehen" des Erdglobusses mit den entsprechenden Aufschriften.

Die Globen können in den verschiedensten Größen hergestellt werden.

### Aufhängung:

Halbkreisförmiges Holz-, Metall- oder Kunststoffstück mit einem Loch am oberen Ende und einem Loch am unteren Ende.
Ein Metallstift am Südpol und ein Metallstift am Nordpol des Erdglobusses.

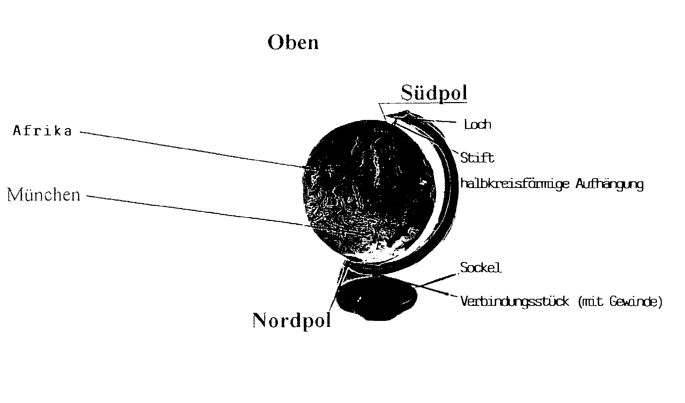

## Patentansprüche

1. Ein Erdglobus, der in seiner Aufhängung so angebracht ist, dass sich die auf dem Globus dargestellte Arktis am unteren Teil der Aufhängung befindet und die Antarktis am oberen Teil der Aufhängung.
Auf diesem "kopfgestellten" Globus befinden sich u.a. der Satz:
"Ab 200 steht die Welt Kopf" oder
"Du hast meine Welt auf den Kopf gestellt"

2. Auf einem Erdglobus sind die Kernschatten von zukünftigen Sonnenfinsternissen durch Linien dargestellt über die Gebiete, über die diese Kernschatten verlaufen.
Die Liniern sind mit dem jeweiligen Datum der zukünftigen Sonnenfinsternis gekennzeichnet.
